# EUROPÄISCHE PATENTSCHRIFT

(11) **EP 1 430 594 B1**
(45) Veröffentlichungstag und Bekanntmachung des Hinweises auf die Patenterteilung: **13.02.2013**
(21) Anmeldenummer: 02760034.5
(22) Anmeldetag: 26.09.2002
(51) Int. Cl.: H02P 9/00, H02P 29/02, H02P 9/42

(54) **KASKADE MIT ELEKTRONISCHER ABSCHALTUNG UND ERWEITERTEM DREHZAHLBEREICH**
CASCADE WITH ELECTRONIC DISCONNECTION AND AN ENLARGED ROTATIONAL SPEED RANGE
CASCADE AVEC MISE HORS CIRCUIT ELECTRONIQUE ET PRESENTANT UNE PLAGE DE VITESSE DE ROTATION ELARGIE

(30) Priorität: 27.09.2001 CH 177901
(43) Veröffentlichungstag der Anmeldung: 23.06.2004
(73) Patentinhaber: Woodward IDS Switzerland AG, 8050 Zürich (CH)
(72) Erfinder: Alexander Stoev, 8127 Forch (CH)
(74) Vertreter: Rentsch Partner AG
(86) Internationale Anmeldenummer: PCT/CH2002/000537
(87) Internationale Veröffentlichungsnummer: WO 2003/028203

(56) Entgegenhaltungen:
- DE-A- 4 230 544
- US-A- 4 812 729
- US-A- 5 510 687
- US-A- 5 798 631
- US-B1- 6 275 392
- US-B1- 6 285 533

## Beschreibung

Die Erfindung betrifft eine Kaskade mit elektronischer Abschaltung gemäss Patentanspruch 1.

Geregelte elektrische Antriebe sind Energiewandler, welche mechanische in elektrische Energie und umgekehrt umwandeln, wobei die Motordrehzahl und der Leistungsbedarf der Anlage geregelt werden können. Diese Antriebe werden zunehmend bei der Umwandlung mechanischer Energie regenerativer Energiequellen in elektrische Energie eingesetzt, wobei die Generatordrehzahl variieren muss, da das Energieaufkommen von Wind, Wasser, etc. variiert. Die abgegebene Leistung hängt in 3. Potenz von der Drehzahl ab, d.h. der Arbeitsbereich der Drehzahl des Antriebs kann limitiert werden.
Bei Pumpen und Lüftern, welche die Mehrzahl der Verbraucher elektrischer Energie im Industriesektor ausmachen, sind die Verhältnisse gleich - eine geringfügige Abweichung von der Nenndrehzahl reicht aus, um den Verbrauch zu drosseln.

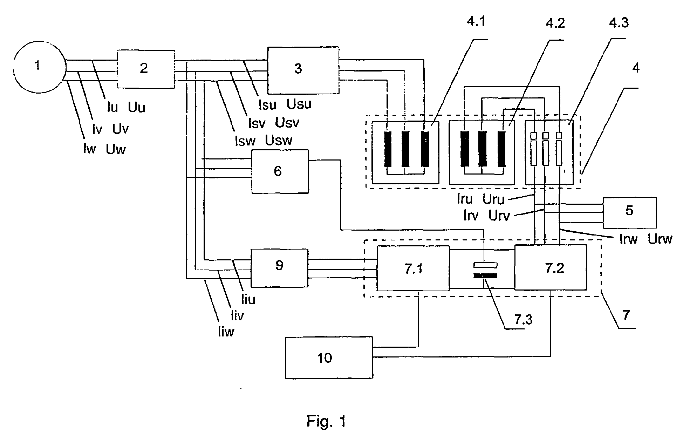

Fig. 1 zeigt einen klassischen geregelten Antrieb mit einen Asynchronmotor 4 und einem Frequenzumformer 7, der die volle Antriebsenergie umwandelt. Der Frequenzumformer 7 besteht aus zwei AC/DC-Wandlern, einem netzseitigen Frequenzumformer 7.1 und einem motorseitigen Frequenzumformer 7.2, welche über einen Zwischenkreis-Kondensator 7.3 gekoppelt sind. Der netzseitige Frequenzumformer 7.1 kann mit Dioden bzw. Thyristoren oder mit Schaltern (IGBT) ausgeführt werden.
Der Asynchronmotor 4 weist Statorwicklungen 4.1 auf, die über einen Motorschütz 3 und einen Netzschutzschalter 2 mit dem Netztransformator, bzw. dem Netz 1 verbunden sind. Die Rotorwicklungen 4.2 des Motors 4 sind über Schleifringe 4.3 mit dem motorseitigen Frequenzumformer 7.2 über einen Kurzschliesser 5 verbunden, während der netzseitige Frequenzumformer 7.1 über einen Netzschalter 9 und den Netzschutzschalter 2 mit dem Netz verbunden sind. Eine Vorladeeinheit 6 ist für die Ladung des Zwischenkreiskondensators 7.3 vorgesehen. Eine Regeleinheit 10 ist mit den beiden Frequenzumformern 7.1, 7.2 verbunden und übernimmt sämtliche Regelaufgaben.

Eine andere Gattung geregelter Antriebe ist die Kaskade, welche vor allem bei geregelten Windanlagen eingesetzt wird. Die Kaskade beinhaltet einen Schleifringläufermotor 4 (doppelt gespeiste Asynchronmaschine) und einen Frequenzumformer 7, wobei die Schlupfenergie aus dem Rotor 4.2 des Motors 4 mit dem motorseitigen Frequenzumformer 7.2 ausgekoppelt wird und mit einem netzseitigen Frequenzumformer 7.1 ins Netz über den Netzschalter 9 gespeist wird (siehe Fig. 1). Solche Anlagen wurden z.B. von V. Quaschning beschrieben (Regenerative Energiesysteme, Carl Hansen Verlag München Wien 1998, S. 217-226). Dieser Antrieb hat den Vorteil, dass nur ein geringer Anteil der Gesamtenergie vom Frequenzumformer 7 übertragen wird, denn der Anteil der durch den Frequenzumformer umgewandelten Leistung ist proportional dem Schlupf S, d.h. beträgt nur einen Bruchteil der Gesamtleistung des Systems. Ein weiterer Vorteil ist der höhere Wirkungsgrad des Systems, da der überwiegende Anteil der Energie direkt vom Stator ins Netz gespeist wird. Die benötigte Wirkleistung des Frequenzumformers für eine 90 %-ige Regelung der Leistung einer Windanlage beträgt ca. 30 - 40 % der Gesamtleistung.

Bekanntlich werden doppelt gespeiste Asynchronmaschinen 4 mit Schleifringen 4.3 und mit gewickelten Rotoren 4.2 und Statoren 4.1 gebaut. Der Frequenzumformer 7, bestehend aus einem motorseitigen Frequenzumformer 7.2 und einem netzseitigen Frequenzumformer 7.1, wird mit abschaltbaren Komponenten [IGBTs (integrated gate base transistor), GTOs (gate controlled tyristor), etc.] aufgebaut, wobei der motorseitige Frequenzumformer 7.2 und der netzseitige Frequenzumformer 7.1 über den Kondensator 7.3 miteinander gekoppelt sind (siehe Fig. 1). Die Vorladevorrichtung 6 sorgt dafür, dass der grosse Kondensator 7.3 langsam aufgeladen wird, vor dem Zuschalten des Frequenzumformers 7 an das Netz 1 über den Netzschalter 9. Damit werden unerwünscht grosse Netz-Zuschaltströme unterdrückt.
Der motorseitige Frequenzumformer 7.2 speist die Rotorwicklungen 4.2 mit den Rotorspannungen Uru, Urv, Urw über die Schleifringe 4.3. Es fliessen dabei die Rotorströme Iru, Irv, Irw, welche eine Magnetisierungskomponente und eine schlupfproportionale Wirkkomponente aufweisen. Der netzseitige Frequenzumformer 7.1 tauscht die Schlupfenergie mit dem Netz 1 aus, indem er die Ströme liu, liv, liw ins Netz speist, wenn der Schlupf S < 0 ist (übersynchroner Drehzahlbereich). Im untersynchronen Drehzahlbereich (S > 0) fliesst die Energie vom Netz 1 in den netzseitigen Frequenzumformer 7.1. Die Netzströme Iu, Iv, Iw ergeben sich aus der Summe der Statorströme Isu, Isv, Isw mit den Strömen Iiu, liv, liw.

In den Offenlegungsschriften WO 99/07996 (Zond Energy Systems: Variable Speed Wind Turbine Generator) und EP 0569556-B1 (Zond Energy Systems: Variable Speed Wind Turbine) wird die Gesamtanordnung eines Generatorsystems mit doppelt gespeister Asynchronmaschine beschrieben, umfassend einen motorseitigen Frequenzumformer, einen netzseitigen Frequenzumformer mit Zwischenkreis, Generator, Motorschütz und Netzschalter. Ausserdem werden die Verfahren zu Wirk- und Blindleistungs- und Drehmomenteinprägung im normalen Drehzahlbereich bei sinusförmigen Strömen und Spannungen beschrieben.
Die doppelt gespeiste Asynchronmaschine wirkt im Stillstand wie ein AC-Transformator, angeschlossen am Netz 1 mit Spannungen Uu, Uv, Uw, wobei die induzierten Rotorspannungen Uru, Urv, Urw um den Übersetzungsfaktor des Motors verstärkt werden. Die Motorübersetzung wird grösser Eins gewählt, so dass die Rotorspannungen Uru, Urv, Urw beim Stillstand des Rotors höher als die Netzspannungen Uu, Uv, Uw sind. Da der motorseitige Frequenzumformer für diese Spannungen nicht ausgelegt ist, wird der Motor erst dann ans Netz geschaltet, wenn der Schlupf S hinreichend klein wird. Der zugelassene Drehzahlbereich solcher Antriebe für Windanlagen beträgt ca. -0.3 < S < 0.3, d.h. der Arbeitsbereich der Drehzahl der doppelt gespeisten Asynchronmaschinen für Windanlagen liegt bei 0.7-facher Nenndrehzahl bis zur 1.3-fachen Nenndrehzahl. Das Ein- und Ausschalten des Motors vom Netz beim Verlassen des zugelassenen Drehzahlbereichs erfolgt über den Motorschütz 3, welcher nach dem Netzschutzschalter 2 angeordnet ist (siehe Fig. 1). Der Netzschutzschalter 2 sorgt für die sicherheitsrelevante Trennung des Antriebs vom Netz. Im Fehlerfall - z.B. beim einphasigen Netzausfall - können auch im zugelassenen Drehzahlbereich Überspannungen am motorseitigen Frequenzumformer 7.2 auftreten. Diese werden von einem Kurzschliesser 5 im Rotorkreis kurzgeschlossen, so dass der motorseitige Frequenzumformer 7.2 vor Zerstörung geschützt wird. Beim Aktivieren des Kurzschliessers 5 fliessen grosse Stator- und Rotorströme, der Netzschutzschalter 2 und der Motorschütz 3 öffnen und der Antrieb wird dadurch vom Netz 1 galvanisch abgetrennt.
Manche Hersteller lassen aus Kostengründen den Motorschütz 3 aus, so dass nicht nur die Fehlerabschaltungen, sondern auch die betriebsmässigen Abschaltungen durch den Netzschutzschalter 2 erfolgen, was die Schalthäufigkeit des Netzschutzschalters stark erhöht. In dieser Betriebsweise muss daher der Netzschutzschalter 2 oft getauscht werden, da die Lebensdauer der Netzschutzschalter, welche mechanisch ausgeführt sind, stark limitiert ist.

Im Patentdokument US 6,285,533 wird ein geregelter Antrieb mit doppelt gespeister Asynchronmaschine beschrieben, die im Statorkreis einen mechanischen Schalter aufweist, der während dem Normalbetrieb kurzgeschlossen und im Fehlerfall geöffnet vorliegt, wobei im Fehlerfall die Energiezufuhr zwischen Netztransformator und Statorwicklungen unterbrochen werden.

Aufgabe der vorliegenden Erfindung ist es, einen geregelten Antrieb mit einer doppelt gespeisten Asynchronmaschine vorzuschlagen, die den Wartungszyklus und die Lebensdauer des Antriebs und seiner Hauptkomponenten verlängern.
Eine weitere Aufgabe besteht darin, durch Einsparung von Komponenten in einem derartigen Antrieb die Kosten zu reduzieren und gleichzeitig die Zuverlässigkeit zu erhöhen.

Erfindungsgemäss wird diese Aufgabe mit einem geregelten Antrieb mit einer doppelt gespeisten Asynchronmaschine gemäss dem Wortlaut des Patentanspruches 1 gelöst.

Die Erfindung wird im Folgenden anhand der Figuren näher erläutert. Es zeigen:
- Fig. 1: Geregelter Antrieb mit doppelt gespeister Asynchronmaschine bekannter Art
- Fig. 2: Erfindungsgemässer geregelter Antrieb mit doppelt gespeister Asynchron maschine
- Fig. 3: Geregelter Antrieb mit elektronischem Schalter
- Fig. 4: Elektronischer Schalter mit netzkommutierten Schaltern
- Fig. 5: Elektronischer Schalter mit Thyristoren im Sternpunkt der Statorwicklungen
- Fig. 6: Erstes Ausführungsbeispiel eines elektronischen Schalters mit zwei Thyristorpaaren
- Fig. 7: Zweites Ausführungsbeispiel eines elektronischen Schalters mit zwei Thyristorpaaren
- Fig. 8: Ausführungsbeispiel eines elektronischen Umschalters mit GT0s
- Fig. 9: Spannungsbegrenzung über dem Gleichrichter mittels einer Diode

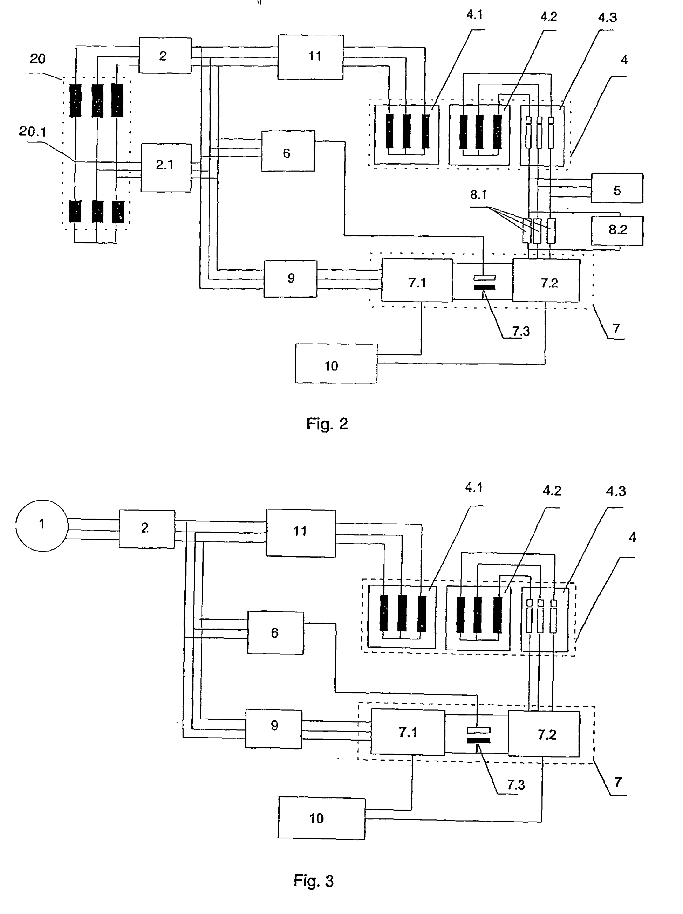

Fig. 2 zeigt einen erfindungsgemässen geregelten Antrieb mit doppelt gespeister Asynchronmaschine, bzw. doppelt gespeistem Asynchronmotor. Bekannt und in Fig. 1 mit gleichen Bezugszeichen bereits erwähnt liegen vor: ein Netzschutzschalter 2, die Asynchronmaschine 4 mit Statorwicklungen 4.1, Rotorwicklungen 4.2 und Schleifringen 4.3, ein Kurzschliesser 5, eine Vorladeeinheit 6, ein Frequenzumformer 7 mit netzseitigem Frequenzumformer 7.1, motorseitigem Frequenzumformer 7.2 und einem Zwischenkreiskondensator 7.3 und eine Regeleinheit 10.
An der Stelle des Motorschützes befindet sich ein elektronischer Schalter 11, der mit der Vorladeeinheit 6 verbunden ist und diese steuert. Ein Netztransformator 20 ist mit dem Netzschutzschalter 2 verbunden, weist einen Abgriff 20.1 auf, der über eine Schalteinheit 2.1 mit dem Netzschalter 9 verbunden ist.

Die kritischsten Elemente in diesem Zusammenhang sind die mechanischen Schalter, speziell Motorschütz, Netzschutzschalter 2, Netzschalter 9 und der Schütz der Vorladeeinheit 6. Die zulässige maximale Schalthäufigkeit und damit die Lebensdauer mechanischer Schalter ist begrenzt und beträgt gegenwärtig für Schütze um 900'000 Schaltzyklen und für Leistungsschalter, wie für den Netzschutzschalter 2, um 10'000 Zyklen im stromlosen Zustand und um 2'500 Zyklen unter Last (Fehlerfall). Spätestens danach ist ein Austausch der Komponenten erforderlich.
In der Erfindung werden verschiedene Anordnungen vorgeschlagen, die zur Reduktion der Schalthäufigkeit führen bzw. die mechanischen Schalter eliminieren. Speziell sind dies
- der Ersatz mechanischer durch elektronische Schalter und damit verbunden durch

Ausnutzung von deren Steuermöglichkeiten die Einsparung weiterer Komponenten.

Fig. 3 zeigt einen geregelten Antrieb mit einem elektronischen Schalter als Ersatz für einen Motorschütz bekannter Art. Bekanntlich wird der Motorschütz benötigt für das Abschalten des Motors, bzw. der doppelt gespeisten Asynchronmaschine 4 beim Verlassen des Arbeitsbereichs.
Ein wartungsfreier elektronischer Schalter 11 befindet sich im Statorkreis ziwschen den Statorwicklungen 4.1 und dem Netzschutzschalter 2 und übernimmt das betriebsmässige und überwiegend auch das Ab- und Zuschalten bei Störungen. Die Schalthäufigkeit des Netzschutzschalters 2 wird damit wesentlich reduziert und die Lebensdauer erhöht. Der elektronische Schalter 11 kann ebenfalls im Sternpunkt der Statorwicklung 4.1 angeordnet sein.

Der elektronische Schalter 11 sorgt dafür, dass im Betrieb die Statorwicklungen 4.1 am Netzschutzschalter 2 angeschlossen sind. Beim Verlassen des Arbeitsbereiches oder im Fehlerfall wird der elektronische Schalter 11 geöffnet. Nach dem Öffnen werden die Spannungen über den Statorwicklungen 4.1 Null, d.h. die Statorwicklungen 4.1 werden spannungsfrei abgeschaltet. Gleichzeitig mit dem Öffnen des elektronischen Schalters 11 werden die Schalter des motorseitigen Frequenzumformers 7.2 ebenfalls geöffnet, so dass die Rotorströme Iru, Irv, Irw nach dem Abbau der gespeicherten magnetischen Energie gleich Null werden. Die doppelt gespeiste Asynchronmaschine wird damit stationär vom Energiefluss entkoppelt und spannungsfrei, ohne dass dabei gefährliche Spannungen am motorseitigen Frequenzumformer 7.2 auftreten. Im Fehlerfall, z.B. beim Auftreten von Störungen im Prozess, wird zusätzlich der Netzschutzschalter 2 geöffnet. Der elektronische Schalter 11 ist vorzugsweise mit netzkommutierten Thyristoren ausgeführt. Die Vorladeeinheit 6 ist jetzt mit dem elektronischen Schalter 11 und mit dem Zwischenkreiskondensators 7.3 verbunden und kann separat ein- und ausgeschaltet werden. Die Thyristoren des elektronischen Schalters werden so angesteuert, dass nur generativer Strom ins Netz fliessen kann. Damit werden im Fehlerfall ein Aufladen des Zwischenkreiskondensators 7.3 über den Rotorkreis 4.2 und damit das Auftreten von Überspannungen über dem Frequenzumformer 7 vermieden.

Der elektronische Schalter 11 kann mit zwangskommmutierten oder mit netzkommmutierten elektronischen Schaltern aufgebaut sein.

Es ist Stand der Technik, gemäss Fig. 1 den grossen Kondensator 7.3 über die Vorladeeinheit 6 beim Einschalten der Anlage langsam vorzuladen, um unerwünscht grosse Netzzuschaltströme zu vermeiden. Nach erfolgter Vorladung wird die Vorladeeinheit 6 abgeschaltet und der netzseitige Frequenzumformer 7.1 über den Schalter 9 direkt mit dem Netz verbunden.
Ziel der Erfindung ist es, durch entsprechende Ansteuerung des elektronischen Schalters 11 die Vorladeeinheit 6 in der in Fig. 1 gezeigten Form einzusparen.
Dieses Ziel wird dadurch erreicht, dass der elektronische Schalter 11, beginnend mit einem hohen Phasenanschnittwinkel, so angesteuert wird, dass in der Rotorwicklung der doppelt gespeisten Asynchronmaschine 4 eine minimale Spannung induziert wird, welche über die Gleichrichterdioden des motorseitigen Frequenzumrichters 7.2 gleichgerichtet und dem Zwischenkreiskondensator 7.3 zugeführt wird. Durch genügend langsame Reduktion des Phasenanschnittwinkels am elektronischen Schalter 11 wird dann erreicht, dass die Spannung am Zwischenkreiskondensator 7.3 ohne unerwünscht grosse Netzzuschaltströme auf ihren Nennwert erhöht wird. Abschliessend wird die Phasenanschnittsteuerung des elektronischen Schalters 11 abgeschaltet und der netzseitige Frequenzumformer 7.1 über den Netzschalter 9 direkt mit dem Netz verbunden. Die Vorladeeinheit 6 in der Form von Fig. 1 kann damit entfallen.

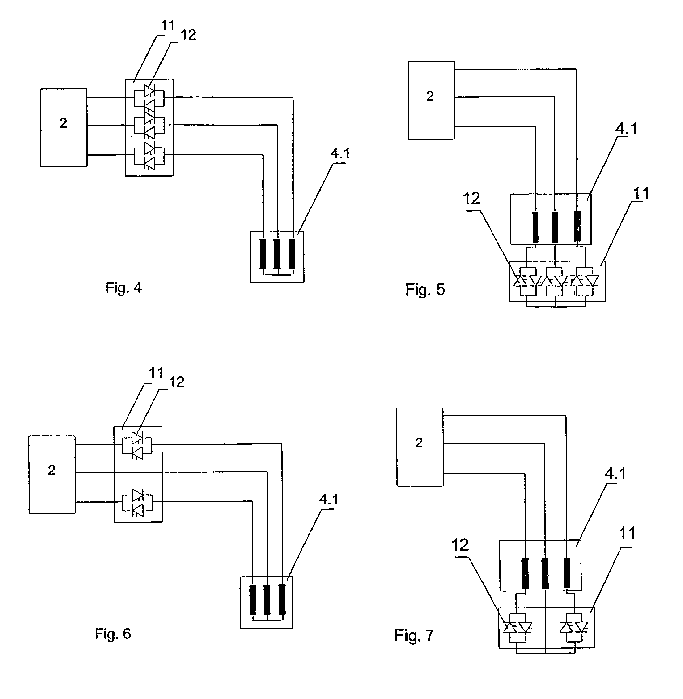

Fig. 4 zeigt eine Realisierungsvariante des elektronischen Schalters 11 mit netzkommutierten Schaltern 12 (Thyristoren), welche am Anfang der Statorwicklungen 4.1 angebracht sind und auf den Netzschutzschalter 2 führen.

Fig. 5 zeigt einen elektronischen Schalter 11, bei dem die Thyristoren 12 im Sternpunkt der Statorwicklungen 4.1 angebracht sind und auf den Netzschutzschalter 2 führen.

Fig. 6 und Fig. 7 zeigen Ausführungsbeispiele des elektronischen Schalters 11 mit zwei statt drei Thyristorpaaren 12.

Mechanische Schalter erzeugen Lichtbogeneffekte, wenn der Schaltvorgang nicht stromlos erfolgt. Diese Effekte führen zu vorzeitigem Verschleiss. Elektronische Schalter weisen derartige Effekte nicht auf, benötigen aber z.T. zusätzliche Einrichtungen zum Abbau der magnetisch gespeicherten Energie, die ansonsten zu Überspannungen führen würde.
Falls für den elektronischen Schalter abschaltbare Komponenten eingesetzt werden, wie z.B. IGBTs (integrated gate base transistor), IGCTs (integrated gate controlled tyristor), GTOs (gate controlled tyristor), dann sind Vorrichtungen für den Abbau der im Stator gespeicherten magnetischen Energie (Freilauf) vorzusehen.

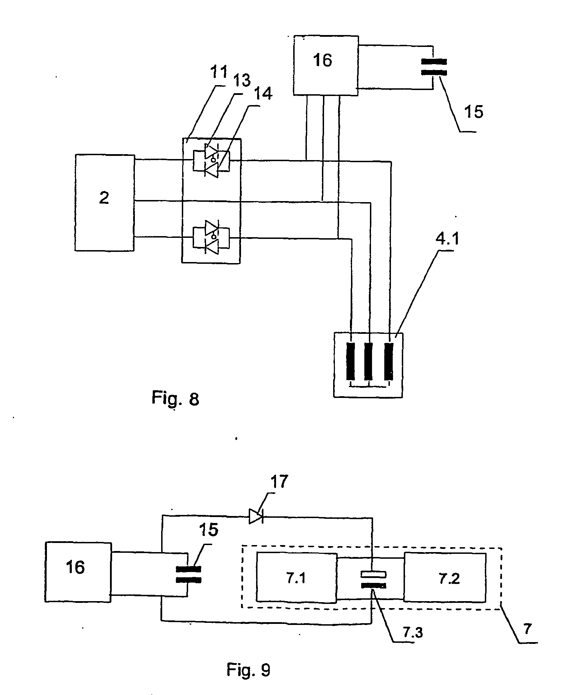

Fig. 8 zeigt ein Ausführungsbeispiel eines elektronischen Umschalters mit GTOs. Der zwischen dem Netzschutzschalter 2 und den Statorwicklungen 4.1 liegende elektronische Schalter 11 ist mit GTOs 13 und Dioden 14 aufgebaut. Ein Gleichrichter 16 ist über den Verbindungsleitungen der Statorwicklungen 4.1 und dem elektronischen Schalter 11 angebracht und weist einen Snubberkondensator 15 für den Abbau der gespeicherten Energie in den Statorwicklungen 4.1 auf. Dadurch werden die Spannungsspitzen limitiert, welche beim Abschalten der Ströme durch die GTOs entstehen.
Natürlich können drei statt zwei GTOs 13 mit antiparallelen Dioden 14 auch deren drei in die Statorwicklungen 4.1 eingebaut werden, entsprechend Fig. 4.

Fig. 9 zeigt eine Spannungsbegrenzung über dem Gleichrichter mittels einer Diode.
Der Frequenzumformer 7 mit netzseitigem Frequenzumformer 7.1 und motorseitigem Frequenzumformer 7.2 weist einen angekoppelten Zwischenkreiskondensator 7.3 auf, dessen beide Anschlüsse parallel zum Snubberkondensator 15 über eine Entkopplungsdiode 17 angeschlossen sind. Der Snubberkondensator 15 ist auch hier mit dem Gleichrichter 16 verbunden.
Damit kann die Spannungsbegrenzung durch den Zwischenkreiskondensator 7.3 des motorseitigen Frequenzumformers 7.2 selbst erfolgen, welcher über eine Diode 17 mit dem Gleichrichter 16 gekoppelt ist, so dass die Energie nur von den Statorwicklungen in den Zwischenkreiskondensator 7.3 fliessen kann.

Der Frequenzumformer 7 kann z.B. als Spannungszwischenkreis-Umformer ausgebildet sein oder als bidirektionaler Spannungszwischenkreis-Umformer, bestehend aus einem netzseitigen Frequenzumformer 7.1 und aus einem motorseitigen Frequenzumformer 7.2, welche beide über den Zwischenkreiskondensator 7.3 gekoppelt sind.

## Patentansprüche

1. Geregelter Antrieb mit doppelt gespeister Asynchronmaschine, umfassend eine doppelt gespeiste Asynchronmaschine (4) mit Statorwicklungen (4.1), Rotorwicklungen (4.2) und Schleifringen (4.3), einen Frequenzumformer (7) mit einem netzseitigen Frequenzumformer (7.1), einem motorseitigen Frequenzumformer (7.2) und einem Zwischenkreiskondensator (7.3), einen Netzschutzschalter (2), eine Vorladeeinheit (6) und eine Regeleinheit (10), angeschlossen an ein Netz mit einem Netztransformator (20), wobei der Energiefluss in die Statorwicklungen (4.1) der doppelt gespeisten Asynchronmaschine (4), welche vom Netztransformator (20) gespeist werden, von einem Schalter, eingebaut im elektrischen Statorkreis, unterbrechbar ist, wobei der Schalter während des Normalbetriebs der doppelt gespeisten Asynchronmaschine (4) kurzgeschlossen bleibt und damit die Energiezufuhr zwischen Netztransformator (20) und Statorwicklungen (4.1) ermöglicht, und ausserhalb des Normalbetriebs und im Fehlerfall geöffnet vorliegt und damit die Energiezufuhrzwischen Netztransformator (20) und Statorwicklungen (4.1) unterbindet, **gekennzeichnet dadurch,**
**dass** der Schalter als elektronischer Schalter (11) ausgebildet ist, der aus netzkommutierten oder aus zwangskommutierten Leistungshalbleitern besteht, wodurch ein wartungsfreier Betrieb resultiert.

2. Geregelter Antrieb nach Anspruch 1, **gekennzeichnet dadurch, dass** der elektronische Schalter (11) die Statorwicklungen (4.1) so abschaltet, dass das Auftreten von zu hohen Spannungen in den Rotorwicklungen (4.3) und am motorseitigen Frequenzumformer (7.2) verunmöglicht wird.

3. Geregelter Antrieb nach Anspruch 1 oder 2, **gekennzeichnet dadurch, dass** der elektronische Schalter (11) so angesteuert wird, dass der Netzstrom überwiegend gegenphasig zur Netzspannung, bzw. generatorisch verläuft und somit im Fehlerfall im Wesentlichen keine Spannungserhöhung am motorseitigen Frequenzumformer (7.2) möglich ist.

4. Geregelter Antrieb nach einem der Ansprüche 1 - 3, **gekennzeichnet dadurch, dass** der Frequenzumformer (7) ein Spannungszwischenkreis-Umformer ist.

5. Geregelter Antrieb nach einem der Ansprüche 1 - 4, **gekennzeichnet dadurch, dass** der Frequenzumformer (7) ein bidirektionaler Spannungszwischenkreis-Umformer ist, bestehend aus einem netzseitigen Frequenzumformer (7.1) und aus einem motorseitigen Umformer (7.2), welche über den Zwischenkreis-Kondensator (7.3) gekoppelt sind.

6. Geregelter Antrieb nach einem der Ansprüche 1 - 5, **gekennzeichnet dadurch, dass** der elektronische Schalter (11) aus antiparallel geschalteten netzkommutierten elektronischen Schaltern, resp. Thyristoren (14) aufgebaut ist.

7. Geregelter Antrieb nach einem der Ansprüche 1 - 6, **gekennzeichnet dadurch, dass** der elektronische Schalter (11) aus netzkommutierten Thyristoren (14) und dazu antiparallel geschalteten zwangskommutierten abschaltbaren Thyristoren (13), bzw. GTOs aufgebaut ist, wobei ein Gleichrichter (16) und ein Snubberkondensator (15) für die Limitierung der Spannung über den Statorwicklungen (4.1) beim Abschalten der Statorströme sorgen.

8. Geregelter Antrieb nach einem der Ansprüche 1 - 6, **gekennzeichnet dadurch, dass** der elektronische Schalter (11) aus netzkommutierten Thyristoren (14) und dazu antiparallel geschalteten zwangskommutierten abschaltbaren Thyristoren (13), bzw. GTOs mit einem Gleichrichter (16) aufgebaut ist und die über den Gleichrichter übertragene Energie über eine Diode (17) in den Zwischenkreiskondensator (7.3) zurückgespeist wird.

9. Geregelter Antrieb nach einem der Ansprüche 1 - 8, **gekennzeichnet dadurch, dass** die Vorladeeinheit (6) aus einer Einrichtung zur Erfassung der Kondensatorspannung und einer Einrichtung zur Ansteuerung des elektronischen Schalters (11) besteht, wobei letztere den Phasenanschnittswinkel des elektronischen Schalters (11) berechnet und dass die Berechnung des Phasenanschnittwinkels des elektronischen Schalters (11) innerhalb eines Regelkreises mitder Kondensatorspannung als Regelgrösse oder innerhalb einer Vorwärtssteuerung erfolgt.

## Claims

1. Regulated drive with double-fed asynchronous machine, comprising a double-fed asynchronous machine (4) with stator windings (4.1), rotor windings (4.2) and slip rings (4.3), a frequency converter (7) with a line-side frequency converter (7.1), with a motor-side frequency converter (7.2) and with an intermediate-circuit capacitor (7.3), a line circuit breaker (2), a pre-charging unit (6) and a closed-loop control unit (10), connected to a power supply system with a line transformer (20), wherein the energy flow into the stator windings (4.1) of the double-fed asynchronous machine (4), which are fed by the line transformer (20), is interruptable by a switch, installed in the electrical stator circuit, wherein the switch remains short-circuited during normal operation of the double-fed asynchronous machine (4) and therefore enables the energy supply between the line transformer (20) and the stator windings (4.1), and is open when not in normal operation and in the event of a fault and therefore suppresses the energy supply between the line transformer (20) and the stator windings (4.1), **characterized in that** the switch is in the form of an electronic switch (11), which consists of line-commutated or forcibly commutated power semiconductors, which results in maintenance-free operation.

2. Regulated drive according to Claim 1, **characterized in that** the electronic switch (11) disconnects the stator windings (4.1) in such a way that the occurrence of excessively high voltages in the rotor windings (4.3) and on the motor-side frequency converter (7.2) is made impossible.

3. Regulated drive according to Claim 1 or 2, **characterized in that** the electronic switch (11) is actuated in such a way that the system current is predominantly in phase opposition to the system voltage, respectively in generator mode, and therefore substantially no voltage increase on the motor-side frequency transformer (7.2) is possible in the event of a fault.

4. Regulated drive according to one of Claims 1-3, **characterized in that** the frequency converter (7) is a voltage intermediate-circuit converter.

5. Regulated drive according to one of Claims 1-4, **characterized in that** the frequency converter (7) is a bidirectional voltage intermediate-circuit converter, consisting of a line-side frequency converter (7.1) and a motor-side converter (7.2), which are coupled via the intermediate-circuit capacitor (7.3).

6. Regulated drive according to one of Claims 1-5, **characterized in that** the electronic switch (11) is constructed from anti-parallel connected line-commutated electronic switches, respectively thyristors (14).

7. Regulated drive according to one of Claims 1-6, **characterized in that** the electronic switch (11) is constructed from line-commutated thyristors (14) and forcibly commutated disconnectable thyristors (13), respectively GTOs, connected anti-parallel therewith, wherein a rectifier (16) and a snubber capacitor (15) limit the voltage across the stator windings (4.1) during disconnection of the stator currents.

8. Regulated drive according to one of Claims 1-6, **characterized in that** the electronic switch (11) is constructed from line-commutated thyristors (14) and forcibly commutated disconnectable thyristors (13), or GTOs, connected anti-parallel therewith, with a rectifier (16) and the energy transmitted via the rectifier is fed back into the intermediate-circuit capacitor (7.3) via a diode (17).

9. Regulated drive according to one of Claims 1-8, **characterized in that** the pre-charging unit (6) comprises a device for detecting the capacitor voltage and a device for actuating the electronic switch (11), wherein the latter device calculates the phase gating angle of the electronic switch (11), and **in that** the calculation of the phase gating angle of the electronic switch (11) is performed within a control loop with the capacitor voltage as controlled variable or within unidirectional control.

## Revendications

1. Commande régulée avec une machine asynchrone à double alimentation, comprenant une machine asynchrone (4) à double alimentation avec des enroulements de stator (4.1), des enroulements de rotor (4.2) et des bagues collectrices (4.3), un convertisseur de fréquence (7) avec un convertisseur de fréquence du côté réseau (7.1), un convertisseur de fréquence du côté moteur (7.2) et un condensateur du circuit intermédiaire (7.3), un disjoncteur de réseau (2), une unité de pré-charge (6) et une unité de régulation (10), raccordée à un réseau par l'intermédiaire d'un transformateur de réseau (20), le flux d'énergie dans les enroulements de stator (4.1) de la machine asynchrone (4) à double alimentation, alimentés par le transformateur de réseau (20), pouvant être interrompu par un interrupteur incorporé dans le circuit électrique du stator, l'interrupteur restant court-circuité pendant le fonctionnement normal de la machine asynchrone (4) à double alimentation et permettant ainsi l'arrivée d'énergie entre le transformateur de réseau (20) et les enroulements de stator (4.1), et hors du fonctionnement normal et en cas de défaillance, il se trouve ouvert et ainsi empêche l'arrivée d'énergie entre le transformateur de réseau (20) et les enroulements de stator (4.1),
**caractérisée en ce que** l'interrupteur est réalisé sous forme d'interrupteur électronique (11) constitué de semi-conducteurs de puissance commutés par le réseau ou commutés par la contrainte, d'où il résulte un fonctionnement sans maintenance.

2. Commande régulée selon la revendication 1, **caractérisée en ce que** l'interrupteur électronique (11) coupe les enroulements de stator (4.1) de manière à empêcher l'apparition de tensions trop élevées dans les enroulements de rotor (4.2) et sur le convertisseur de fréquence du côté moteur (7.2).

3. Commande régulée selon la revendication 1 ou 2, **caractérisée en ce que** l'interrupteur électronique (11) est piloté de telle sorte que le courant du réseau s'écoule majoritairement en opposition de phase avec la tension du réseau, respectivement du générateur et ainsi en cas de défaillance, essentiellement aucune élévation de tension n'est possible sur le convertisseur de fréquence du côté moteur (7.2).

4. Commande régulée selon l'une des revendications 1 - 3, **caractérisée en ce que** le convertisseur de fréquence (7) est un convertisseur de tension du circuit intermédiaire.

5. Commande régulée selon l'une des revendications 1 - 4, **caractérisée en ce que** le convertisseur de fréquence (7) est un convertisseur de tension bidirectionnel du circuit intermédiaire, constitué d'un convertisseur de fréquence du côté réseau (7.1) et d'un convertisseur du côté moteur (7.2) accouplés par l'intermédiaire du condensateur du circuit intermédiaire (7.3).

6. Commande régulée selon l'une des revendications 1 - 5, **caractérisée en ce que** l'interrupteur électronique (11) est construit avec des interrupteurs électroniques, respectivement des thyristors (14) commutés par le réseau, branchés en antiparallèle.

7. Commande régulée selon l'une des revendications 1 - 6, **caractérisée en ce que** l'interrupteur électronique (11) est construit avec des thyristors (14) commutés par le réseau et en plus des thyristors (13), respectivement des GTOs, pouvant être coupés, commutés par la contrainte, branchés en antiparallèle, un redresseur (16) et un condensateur d'amortissement (15) étant chargés de la limitation de la tension aux bornes des enroulements de stator (4.1) lors de la coupure des courants de stator.

8. Commande régulée selon l'une des revendications 1 - 6, **caractérisée en ce que** l'interrupteur électronique (11) est construit avec des thyristors (14) commutés par le réseau et en plus des thyristors (13), respectivement des GTOs, pouvant être coupés, commutés par la contrainte, branchés en antiparallèle, avec un redresseur (16), et l'énergie transmise par l'intermédiaire du redresseur est renvoyée par l'intermédiaire d'une diode (17) dans le condensateur du circuit intermédiaire (7.3).

9. Commande régulée selon l'une des revendications 1 - 8, **caractérisée en ce que** l'unité de pré-charge (6) est constituée d'un dispositif pour enregistrer la tension du condensateur et d'un dispositif pour commander l'interrupteur électronique (11), ce dernier calculant l'angle de phase de coupure de l'interrupteur électronique (11) et **en ce que** le calcul de l'angle de phase de coupure de l'interrupteur électronique (11) s'effectue à l'intérieur d'une boucle de régulation avec la tension du condensateur comme grandeur de régulation ou à l'intérieur d'une commande directe.
